# EUROPEAN PATENT APPLICATION

(11) **EP 4 621 735 A1**
(43) Date of publication of application: **24.09.2025**
(21) Application number: 23890853.7
(22) Date of filing: 16.11.2023
(51) Int. Cl.: G06V 20/40

(54) **IMAGE PROCESSING METHOD AND APPARATUS, ELECTRONIC DEVICE, AND STORAGE MEDIUM**

(30) Priority: 18.11.2022 CN 202211449277
(71) Applicant: Beijing Zitiao Network Technology Co., Ltd., Beijing 100190 (CN)
(72) Inventor: LU, Zhixiong, Beijing 100028 (CN)
(74) Representative: Marks & Clerk LLP
(86) International application number: PCT/CN2023/132003
(87) International publication number: WO 2024/104423

(57) **Abstract**

Provided in the embodiments of the present disclosure are an image processing method and apparatus, an electronic device and a storage medium. The method comprises: when detecting an image acquisition condition being satisfied, acquiring a video frame to be processed, and extracting a target area image of said video frame; displaying at a target position of said video frame the target area image, and displaying at an associated position of the target position at least one piece of information to be displayed, said information comprising a text to be displayed and/or an image to be displayed; and when a special-effect image display condition is satisfied, displaying a target special-effect image, said information comprising target information, and the target special-effect image being associated with the target information and the target area image. The embodiments of the present disclosure can, according to randomly determined target information and a target area image, draw a special-effect image, so as to further obtain a personalized special-effect display image, thereby improving the diversity of the content of special-effect images and further improving the interestingness for users during use.

## Description

The present application claims priority to Chinese Patent Application No. 202211449277.3, filed on November 18, 2022, which is incorporated herein by reference in its entirety as a part of the present application.

### TECHNICAL FIELD

Embodiments of the present disclosure relate to an image processing method and apparatus, an electronic device, and a storage medium.

### BACKGROUND

With the development of network technologies, an increasing number of application programs are coming into life of users, especially a series of software that can be used to shoot images, which are popular among users.

Typically, software developers may add various effect props to applications for use by users during image shooting.

However, the effect props provided for the users are very limited, and only ready-made materials can be used, which causes the developers to spend a lot of time in making materials. The content of an effect image needs to be further enriched. Especially, during personalized effect processing of images, effect images generated based on relevant effect props have a dull display effect and lack fun.

### SUMMARY

Embodiments of the present disclosure provide an image processing method and apparatus, an electronic device, and a storage medium, so as to improve the effect display effect and enhance the fun during use by a user.

According to a first aspect, an embodiment of the present disclosure provides an image processing method. The method includes:
upon detecting that an image acquisition condition is satisfied, obtaining a video frame to be processed, and extracting a target region image from the video frame to be processed;
displaying the target region image at a target position in the video frame to be processed, and displaying, at a position associated with the target position, at least one piece of information to be displayed, where the information to be displayed includes text to be displayed and/or an image to be displayed; and
displaying a target effect image when an effect image display condition is satisfied,
where the information to be displayed includes target information, and the target effect image is associated with the target information and the target region image.

According to a second aspect, an embodiment of the present disclosure further provides an image processing apparatus. The apparatus includes:
a target region image extraction module configured to, upon detecting that an image acquisition condition is satisfied, obtain a video frame to be processed, and extract a target region image from the video frame to be processed;
a target region image display module configured to display the target region image at a target position in the video frame to be processed, and display, at a position associated with the target position, at least one piece of information to be displayed, where the information to be displayed includes text to be displayed and/or an image to be displayed; and
a target effect image display module configured to display a target effect image when an effect image display condition is satisfied,
where the information to be displayed includes target information, and the target effect image is associated with the target information and the target region image.

According to a third aspect, an embodiment of the present disclosure further provides an electronic device. The electronic device includes:
one or more processors; and
a storage apparatus configured to store one or more programs,
where the one or more programs, when executed by the one or more processors, cause the one or more processors to implement the image processing method according to any one of the embodiments of the present disclosure.

According to a fourth aspect, an embodiment of the present disclosure further provides a storage medium including computer-executable instructions, where the computer-executable instructions, when executed by a computer processor, are used to perform the image processing method according to any one of the embodiments of the present disclosure.

### BRIEF DESCRIPTION OF DRAWINGS

The foregoing and other features, advantages, and aspects of embodiments of the present disclosure become more apparent with reference to the following specific implementations and in conjunction with the accompanying drawings. Throughout the drawings, the same or similar reference numerals denote the same or similar elements. It should be understood that the accompanying drawings are schematic and that parts and elements are not necessarily drawn to scale.
Fig. 1 is a schematic flowchart of an image processing method according to an embodiment of the present disclosure;
Fig. 2 is a schematic diagram of a user display interface according to an embodiment of the present disclosure;
Fig. 3 is a schematic flowchart of an image processing method according to an embodiment of the present disclosure;
Fig. 4 is a schematic flowchart of an image processing method according to an embodiment of the present disclosure;
Fig. 5 is a schematic flowchart of an image processing method according to an embodiment of the present disclosure;
Fig. 6 is a schematic diagram of a structure of an image processing apparatus according to an embodiment of the present disclosure; and
Fig. 7 is a schematic diagram of a structure of an electronic device according to an embodiment of the present disclosure.

### DETAILED DESCRIPTION

The embodiments of the present disclosure are described in more detail below with reference to the accompanying drawings. Although some embodiments of the present disclosure are shown in the accompanying drawings, it should be understood that the present disclosure may be implemented in various forms and should not be construed as being limited to the embodiments set forth herein. Rather, these embodiments are provided for a more thorough and complete understanding of the present disclosure. It should be understood that the accompanying drawings and the embodiments of the present disclosure are only for exemplary purposes, and are not intended to limit the scope of protection of the present disclosure.

It should be understood that the various steps described in the method implementations of the present disclosure may be performed in different orders, and/or performed in parallel. Furthermore, additional steps may be included and/or the execution of the illustrated steps may be omitted in the method implementations. The scope of the present disclosure is not limited in this respect.

The term "include/comprise" used herein and the variations thereof are an open-ended inclusion, namely, "include/comprise but not limited to". The term "based on" is "at least partially based on". The term "an embodiment" means "at least one embodiment". The term "another embodiment" means "at least one another embodiment". The term "some embodiments" means "at least some embodiments". Related definitions of the other terms will be given in the description below.

It should be noted that concepts such as "first" and "second" mentioned in the present disclosure are only used to distinguish different apparatuses, modules, or units, and are not used to limit the sequence of functions performed by these apparatuses, modules, or units or interdependence.

It should be noted that the modifiers "one" and "a plurality of" mentioned in the present disclosure are illustrative and not restrictive, and those skilled in the art should understand that unless the context clearly indicates otherwise, the modifiers should be understood as "one or more".

The names of messages or information exchanged between a plurality of apparatuses in the implementations of the present disclosure are used for illustrative purposes only, and are not used to limit the scope of these messages or information.

It can be understood that before the use of the technical solutions disclosed in the embodiments of the present disclosure, the user shall be informed of the type, range of use, use scenarios, etc., of personal information involved in the present disclosure in an appropriate manner in accordance with the relevant laws and regulations, and the authorization of the user shall be obtained.

For example, in response to reception of an active request from the user, prompt information is sent to the user to clearly inform the user that a requested operation will require access to and use of the personal information of the user. As such, the user can independently choose, based on the prompt information, whether to provide the personal information to software or hardware, such as an electronic device, an application, a server, or a storage medium, that performs operations in the technical solutions of the present disclosure.

As an optional but non-limiting implementation, in response to the reception of the active request from the user, the prompt information may be sent to the user in the form of, for example, a pop-up window, in which the prompt information may be presented in text. Furthermore, the pop-up window may further include a selection control for the user to choose whether to "agree" or "disagree" to provide the personal information to the electronic device.

It can be understood that the above process of notifying and obtaining the authorization of the user is only illustrative and does not constitute a limitation on the implementations of the present disclosure, and other manners that satisfy the relevant laws and regulations may also be applied in the implementations of the present disclosure.

It can be understood that the data involved in the technical solutions (including, but not limited to, the data itself and the access to or use of the data) shall comply with the requirements of corresponding laws, regulations, and relevant provisions.

Before the technical solutions are described, an exemplary description of an application scenario may be given. The technical solutions of the embodiments of the present disclosure may be applied in any scenario where an effect video needs to be generated. During application of the effect method, a corresponding effect image may be determined based on video content in a video frame to be processed. For example, in a short video shooting scenario, a live streaming scenario, or a video call scenario, provided that an effect prop provided in the embodiments of the present disclosure is integrated into an application program, effect processing may be performed using the technical solutions provided in the embodiments of the present disclosure.

An image processing apparatus provided for performing the embodiments of the present disclosure may be integrated into application software supporting an effect video processing function, and the software may be installed on an electronic device. Optionally, the electronic device may be a mobile terminal, a PC, or the like. The application software may be a type of software for image/video processing, and specific application software is not nutnerated herein, provided that the image/video processing can be implemented. Alternatively, the application software may be an application program that is specially developed to implement addition and display of an effect in software, or may be integrated in a corresponding page such that the user can process an effect video through the page integrated in the PC.

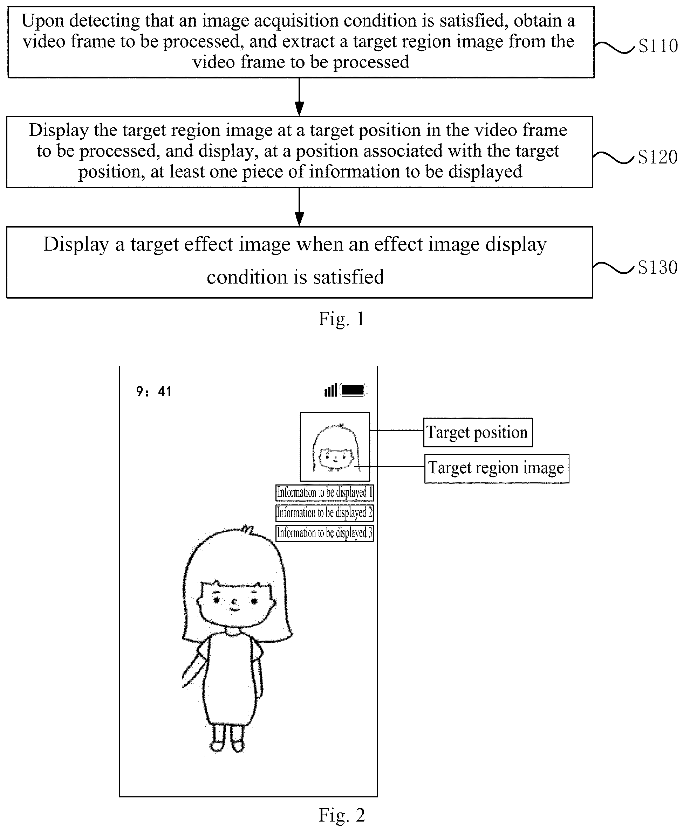

Fig. 1 is a schematic flowchart of an image processing method according to an embodiment of the present disclosure. This embodiment of the present disclosure is applicable to a case where a corresponding target effect image is rendered based on video content in a video frame to be processed and randomly selected target information. The method may be performed by an image processing apparatus. The apparatus may be implemented in the form of software and/or hardware. Optionally, the apparatus may be implemented by an electronic device, and the electronic device may be a mobile terminal, a PC, a server, or the like. The technical solutions provided in the embodiments of the present disclosure may be executed based on a client or a server, or may be executed based on cooperation of the client and the server.

As shown in Fig. 1, the method includes the following steps.

S110: Upon detecting that an image acquisition condition is satisfied, obtain a video frame to be processed, and extract a target region image from the video frame to be processed.

In this embodiment, a control for triggering effects may be developed in advance in the application software or application program supporting the effect video processing function, and when it is detected that a user triggers the control, a response may be given to an effect trigger operation, to obtain the video frame to be processed and extract the target region image from the video frame to be processed.

The image acquisition condition is a condition for determining whether to obtain the video frame to be processed and extract the target region image from the video frame to be processed.

In this embodiment of the present disclosure, the image acquisition condition may include a plurality of cases. Accordingly, whether to obtain the video frame to be processed and extract the target region image from the video frame to be processed may be determined based on whether the current trigger operation satisfies the corresponding case.

Optionally, the image acquisition condition may include the following cases:
detecting triggering of an image acquisition control; detecting triggering of an effect prop; detection that a frame-in picture including a target object; inclusion of an image acquisition wake-up word in acquired speech information; or detecting a current posture of a target object being consistent with a preset posture.

In this embodiment, in order to diversify the image acquisition condition and meet a personalized requirement of the user, the video frame to be processed may be obtained in a variety of manners. In the first manner, the triggering of the image acquisition control is detected. The image acquisition control may be used as a trigger condition, where the image acquisition control is preprogrammed, and when an image is shot based on a shooting apparatus, a click on the image acquisition control indicates that the image acquisition condition is satisfied. In this case, provided that the acquired video frame to be processed includes entity content, effect processing may be performed on the entity content in the video frame to be processed.

In the second manner, the triggering of the effect prop is detected, which may be understood as that program code or processing data is compressed based on the technical method provided in this embodiment of the present disclosure, such that it is integrated as an effect package into some application program software as an effect prop. When the effect prop is triggered, it indicates that the video frame to be processed may be obtained currently and the target region image may be extracted from the video frame to be processed, in which case the image acquisition condition is satisfied.

In the third manner, it is detected that the frame-in picture includes the target object. Provided that it is detected that the frame-in picture includes the target object, that is, a display interface of a mobile terminal device includes the corresponding target object, it is considered that the sound mixing condition is satisfied. The target object may be preset. For example, the target object may be a user, and as long as a user is detected in the display interface, a computer considers that the image acquisition condition is satisfied.

In the fourth manner, the acquired speech information includes the image acquisition wake-up word. Audio information of a user may be acquired in advance, and the acquired audio information may be analyzed and processed to recognize text corresponding to the audio information. If the text corresponding to the audio information includes a preset wake-up word, which may optionally be "Please shoot the current image", "Please turn on the effect function", etc., it indicates that the video frame to be processed in the display interface can be obtained.

In the fifth manner, it is detected that the current posture of the target object is consistent with the preset posture. In this manner, some body moves may be preset as effect trigger moves, and when it is detected that a body move currently performed by a user in a field of view is consistent with a preset body move, it may be determined that an effect operation is triggered. Optionally, the preset body move may be raising a hand, opening the mouth, turning the head, or the like.

The video frame to be processed may be an image that requires processing. The image may be an image that is acquired based on a terminal device, or an image that is prestored by the application program software in a storage space. The terminal device may refer to an electronic product with an image shooting function, such as a camera, a smartphone, and a tablet computer.

During practical application, a random selection may be made on the basis of an image display page of the terminal device, to obtain the video frame to be processed. When triggering of a confirm control or a select control is detected, it is determined that an effect operation is triggered, and a currently selected image is used as an image to be processed. Alternatively, a plurality of images may be prestored in an early development stage, and when it is detected that the user triggers the effect operation, an image may be directly imported from the storage space to the current client. Alternatively, when it is detected that the user triggers the effect operation, an image uploaded by the user to the current client via an external device in real time or periodically is used as the image to be processed.

The target region image is a partial image in the video frame to be processed. The target region image is determined in at least two manners. In one manner, the target region image is determined based on the trigger operation of the user, and in the other manner, the target region image is determined dynamically. The target effect image is obtained by fusing an effect image determined from the target information with the target region image, so as to achieve the effect that the image content in the video frame to be processed can be in combination with the target information for performing the effect processing.

Specifically, when it is detected that any one of the image acquisition conditions is satisfied, the video frame to be processed may be obtained, and the target region image may be extracted, in a preset manner, from the video frame to be processed. The trigger operation in the preset manner is as follows. The user can select, based on a mouse or another input software, a corresponding region in the video frame to be processed, and use an image in the selected region as the target region image. The dynamic determination in the preset manner is as follows. A target part may be preset, display information of the target part in the video frame to be processed may be determined from the video frame to be processed, and then the target region image may be extracted based on the display information, where the target region image corresponds to the target part in this case.

S120: Display the target region image at a target position in the video frame to be processed, and display, at a position associated with the target position, at least one piece of information to be displayed.

The target position may be any position in the video frame to be processed, for displaying the target region image. The associated position is linked with the target position. For example, a horizontal pixel distance or a vertical pixel distance between the associated position and the target position may be predetermined, and after the target position is determined, the target associated position is determined based on the preset horizontal pixel distance or vertical pixel distance, i.e., the associated position may be determined dynamically. A benefit of linking the target position with the associated position is that during scrolling, text to be displayed at the associated position can be associated with the effect of an image rendered based on the target region image and the scrolling information to be displayed.

In this embodiment, the text information to be displayed includes text to be displayed and/or an image to be displayed.

It may be understood that the text to be displayed and/or the image to be displayed may be a plurality of pieces of text to be selected and/or images to be selected that are developed in advance in a development stage, or may be input text or an input image that is edited by a user during practical application. Further, the information to be displayed can be statically or dynamically displayed at the associated position in the display interface, where the dynamic display may involve cyclically playing a plurality of pieces of information to be displayed, to solve the problem that a user feels bored while waiting.

Optionally, the target position includes at least one of the following: a preset display position used as the target position; and a blank region in the video frame to be processed that is dynamically determined and used as the target position. Accordingly, the associated position is a position at a lower edge of the target position.

It may be understood that the target position is a preset display position. For example, the preset target position may be a position at a preset pixel distance from an edge of the display interface, or may be the exact center of the video frame to be processed, which may be set by a user in a program development stage according to actual requirements. Alternatively, the target position may be dynamically determined using a video content processing method. In order to view the entire content in the video frame to be processed, the blank region in the video frame to be processed may be determined and then used as the target position. As such, the target region image is displayed without blocking the image content in the video frame to be processed. During specific application, the video frame to be processed is composed of a plurality of pixels, and each pixel corresponds to a different color. For a color image, one color is formed by mixing three primary colors, namely, red (R), green (G), and blue (B), according to a proportion. One pixel needs to be represented by three parts, which respectively represent R, G, and B, and then integer values from 0 to 255 are used to differentiate different intensities of a primary color. If values corresponding to R, G, and B of a pixel in the image are 255 or greater than a preset value 220, it indicates that the region is a blank region, and this region is used as the target position for displaying the target region image. Further, a center point of the target position may coincide with a center point of the target region image, or the target region image may be adaptively filled into the blank region. Accordingly, the position associated with the target position may be the position at the lower edge of the target position. The benefit of such a setting is as follows. The target position can be determined in a variety of manners, and the target region image can also be displayed without blocking the image content in the video frame to be processed.

The information to be displayed includes the text to be displayed and/or the image to be displayed. The text to be displayed is predetermined text content, and the text to be displayed may include words corresponding to a plurality of dimensions. The image to be displayed is preset image content, for example, the image content may be an image of a sports field, an image of a new year atmosphere, etc. The image to be displayed may also include images corresponding to a plurality of dimensions.

Optionally, the information to be displayed includes words corresponding to at least three dimensions, the at least three dimensions including time, place, and/or event dimensions.

In this embodiment, a plurality of words are included in each dimension, and the words included in each dimension are independent of each other. During display of the information to be displayed, the information to be displayed in each dimension is displayed in different display controls. For example, the information to be displayed in the time dimension is displayed at a first display control, the information to be displayed in the place dimension is displayed at a second display control, and the information to be displayed in the event dimension is displayed at a third display control.

During practical application, the information to be displayed corresponding to the time dimension may include: in a final game, at work, etc. The information to be displayed corresponding to the place dimension may include: a sports field, home, a park, a mall, a school, etc. The information to be displayed corresponding to the event dimension may include: playing football, drinking beer, attending class, eating, shopping, etc. The benefit of such a setting is as follows. The information to be displayed includes words in a plurality of dimensions, such that an effect image can be generated from a plurality of perspectives, creating a realistic live atmosphere.

Specifically, the corresponding target position can be determined in a preset manner, and then the target region image is filled at the target position for display. Further, the at least one piece of information to be displayed is displayed at the position associated with the target position, where the at least one piece of information to be displayed is displayed in a cyclic manner. For example, a display mode for a scrollbar may be set at the position associated with the target position, such that the text to be displayed and/or the image to be displayed are displayed with different content as the scrollbar dynamic scrolls. As such, during the effect processing for the target region image, cyclic display of the text to be displayed and/or the image to be displayed can be viewed, which avoids the problem that the user feels bored and loses interest while waiting.

For example, the target position, the target region image, and the position of the information to be displayed in a user display interface are as shown in Fig. 2. As shown in Fig. 2, in the user display interface, a rectangular box at the upper right corner represents the target position, an avatar in the rectangular box is the target region image, and below the target position is the position associated with the target position. At the associated position, there are three corresponding strip-shaped scrollbars for displaying the information to be displayed. During practical application, each scrollbar can cyclically display words in different dimensions or images in different dimensions. For example, a first scrollbar cyclically displays the text to be displayed corresponding to the time dimension, a second scrollbar cyclically displays the image to be displayed corresponding to the place dimension, and a third scrollbar cyclically displays the text to be displayed corresponding to the event dimension.

S130: Display a target effect image when an effect image display condition is satisfied.

The effect image display condition is a condition for determining whether the target effect image can be displayed. The effect image display condition may include a variety of cases. Accordingly, whether the target effect image is to be displayed may be determined based on whether the current trigger operation satisfies the corresponding case. The benefit of such a setting is as follows. Whether the target effect image is to be displayed may be determined in more diversified manners, the interaction between the user and the display interface may be enhanced, the personalized requirement of the user is met, and the user experience is thus improved.

Optionally, the effect image display condition may include the following cases:
the target effect image having been made; an actual duration for making the target effect image reaching a preset duration threshold; and detecting triggering of a control for displaying the target effect image.

In the first manner, the target effect image is displayed when the target effect image has been made. After determining the target effect image and the target information corresponding the target effect image, the application starts to make the target effect image, and then displays the target effect image upon obtaining the finished target effect image, so as to achieve the effect of displaying the instant the production is completed.

In the second manner, the target effect image is displayed when the actual duration for making the target effect image reaches the preset duration threshold. During practical application, the duration threshold may be preset. A timestamp corresponding to the start of making the target effect image is recorded as a start timestamp, and then a difference between a current timestamp and the start timestamp is calculated. When the difference between the current timestamp and the start timestamp is greater than or equal to the preset duration threshold, the user has waited long enough, and thus is given feedback regardless of whether the target effect image has been made.

In the third manner, the target effect image is displayed when triggering of the control for displaying the target effect image is detected. During practical application, the control that triggers the display of the target effect image may be preset, and when it is detected that the user triggers the corresponding control, the display of the target effect image starts.

The information to be displayed includes the target information. Since the information to be displayed includes the words in the time, place, and event dimensions, the target information is composed of the information to be displayed corresponding to one of the dimensions. The target effect image is an effect image obtained by performing the effect processing on the target region image, and the target effect image is associated with the target information and the target region image.

Specifically, image content corresponding to each piece of information to be displayed may be made in advance, and a one-to-one mapping relationship may be established. The information to be displayed may include a keyword or an image for describing a scene, and may also include a keyword or an image for describing an action. Then, the target region image is fused with the image content corresponding to the target information, to obtain and display the target effect image. Alternatively, a target scene and a virtual object corresponding to a keyword or an image in the target information may be rendered in real time based on the target information, and further, the virtual object is replaced with the target region image to obtain the target effect image.

It should also be noted that, in order to improve the effect processing effect of this effect prop and reflect a smooth transition during the effect processing, displaying the target effect image further includes: generating a transition animation based on the target effect image, to display the target effect image based on the transition animation.

The transition animation is an animation used to characterize a transition and change between scenes. For example, the transition animation may include a fade-in fade-out animation, a frame-in frame-out animation, or the like.

In this embodiment, the transition animation may be implemented through at least a plurality of manners. The first one is making the transition animation the same for all target effect images. The second one is establishing a mapping relationship between a keyword in target information in a target effect image and a transition animation. The third one is determining a transition animation based on a final generated target effect image.

In the first implementation, it is predetermined that all the target effect images correspond to the same transition animation. After the target effect image is obtained, the transition animation may be loaded, and the target effect image is displayed based on the loaded transition animation.

In the second implementation, the mapping relationship between the keyword in the target information and the transition animation is pre-established. After a target effect image is obtained, target information based on which the target effect image is generated is determined, and the transition animation corresponding to the keyword in the target information may be called according to the mapping relationship and then played.

In the third implementation, the transition animation may alternatively be generated in real time based on a target effect image. For example, after the target effect image is determined, the target effect image may be fragmented, to achieve a transition animation effect of displaying the target effect image in a fragment splicing manner.

By means of the technical solution of this embodiment of the present disclosure, the video frame to be processed is obtained when it is detected that the image acquisition condition is satisfied, and the target region image is extracted from the video frame to be processed. Further, the target region image is displayed at the target position in the video frame to be processed, and the at least one piece of information to be displayed is displayed at the position associated with the target position, where the information to be displayed includes the text to be displayed and/or the image to be displayed. Finally, the target effect image is displayed when the effect image display condition is satisfied, where the information to be displayed includes the target information, and the target effect image is associated with the target information and the target region image. By means of the technical solution provided in this embodiment of the present disclosure, a target region image is extracted from an image to be processed, and the target region image and information to be displayed are displayed in the video frame to be processed. Further, an effect scene and a virtual object are generated based on the target information, and the target region image is fused with the virtual object to finally obtain the target effect image. Therefore, an effect image can be rendered based on the randomly determined target information and target region image, to obtain a personalized effect display image, which diversifies content of the effect image, and thus enhances the fun during use by a user.

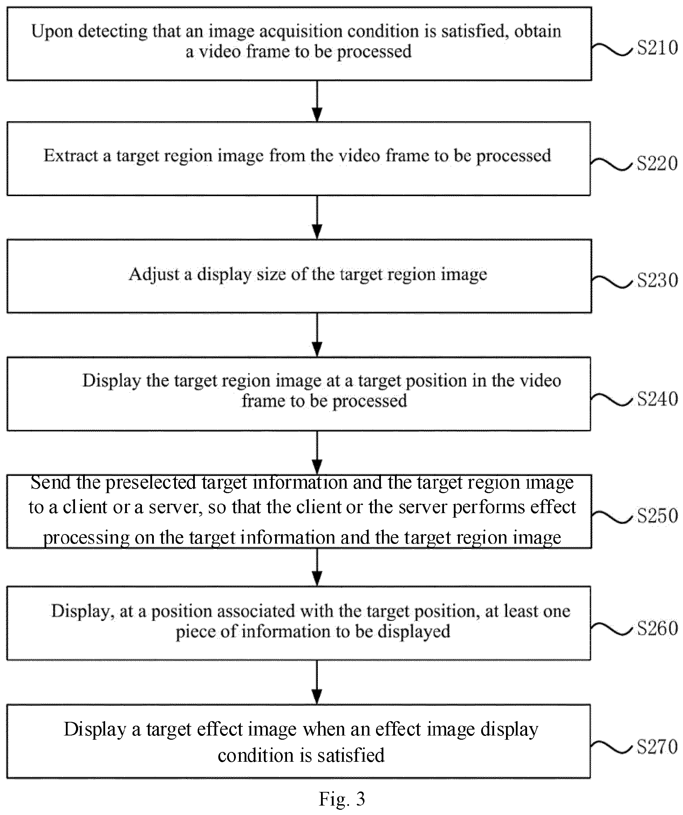

Fig. 3 is a schematic flowchart of an image processing method according to an embodiment of the present disclosure. On the basis of the foregoing embodiments, when it is detected that the image acquisition condition is satisfied, the video frame to be processed may be obtained in a variety of manners, and the target region image may also be extracted from the video frame to be processed in a variety of manners. For the specific implementation thereof, reference may be made to the technical solution of this embodiment. Details about technical terms that are the same as or corresponding to those in the above embodiment are not described herein again.

As shown in Fig. 3, the method specifically includes the following steps.

S210: Upon detecting that an image acquisition condition is satisfied, obtain a video frame to be processed.

During practical application, in order to determine the video frame to be processed in more diversified manners while enhancing the interaction between a user and a display interface to meet a personalized requirement of the user, the video frame to be processed may be obtained in a variety of manners.

Optionally, obtaining the video frame to be processed may include: obtaining the video frame to be processed from video frames to be displayed that are acquired within a preset duration; or using a video frame acquired at the end of a countdown as the video frame to be processed; or when an acquired video frame includes a target object, using the video frame as the video frame to be processed.

In the first manner, the video frame to be processed is obtained from the video frames to be displayed that are acquired within the preset duration. When no trigger operation of the user on an image upload control is detected within the preset duration, a video shot by a terminal device within the preset duration may be processed based on a preset program, so as to obtain at least one video frame and display the video frame in a display interface, such that the user can make a selection from a plurality of video frames through a trigger operation. When a trigger operation for one of the video frames is detected, the video frame currently selected by the user may be used as the video frame to be processed. Alternatively, any one of the video frames to be displayed that are acquired within the preset duration may be randomly selected as the video frame to be processed.

In the second manner, the video frame acquired at the end of the countdown is used as the video frame to be processed. During practical application, when no trigger operation of the user on the image upload control is detected within the preset duration, the countdown displayed in the display interface returns to zero, and the video frame acquired by the terminal device at the moment of return-to-zero may be used as the video frame to be processed.

In the third manner, when the acquired video frame includes the target object, the video frame is used as the video frame to be processed. Type information of the target object is preset. For example, the type information may be a person, a thing, etc. The target object may be a preset object. For example, an image corresponding to the target object is uploaded in advance, and then subject analysis of the image is performed. When it is detected that the video frame to be processed includes at least one object to be processed and the at least one object to be processed includes an object that has consistent subject information with the target object, the acquired video frame is used as the video frame to be processed. Alternatively, the type information corresponding to the target object is preset. For example, a user or a pet is preset, and provided that it is detected that a frame-in picture includes the user or the pet, the acquired video frame is used as the video frame to be processed.

S220: Extract a target region image from the video frame to be processed.

In this embodiment, the target region image may be manually determined and then extracted according to a requirement of the user, or may be dynamically extracted based on a preset target part.

Optionally, the target region image may be extracted in the following four manners: determining and extracting the target region image based on an edit operation for the video frame to be processed; or extracting, based on a preset target part, the target region image corresponding to the target part from the video frame to be processed; or extracting, based on a shooting parameter, the target region image from the video frame to be processed, where the shooting parameter includes a front-facing shooting parameter or a rear-facing shooting parameter; or extracting, based on an object type of the target object in the video frame to be processed, the target region image from the video frame to be processed, where the object type includes at least one of an animal, a plant, a user, and a scenery.

Specifically, the user can perform the edit operation in the video frame to be processed by means of circling, so as to extract the target region image. For example, the user may manually make a selection, based on a mouse or another input software, on the video frame to be processed, and then use content of the selected closed or semi-closed region as the target region image.

Content to be extracted may be manually outlined at a position to be used as the position of the target region image, or a pre-configured rectangular box may be used, such that the user may manually move the rectangular box to the position to be used as the position of the target region image, to determine that the content selected with the current rectangular box is the target region image and then extract the target region image.

It also can be that, the target part is preset, and if the video frame to be processed includes the preset target part, the image corresponding to the target part is extracted as the target region image. The target part may be a preset portion, for example, the head, an eye, etc.

It also can be that, the target region image may be dynamically extracted based on the shooting parameter. The shooting parameter includes the front-facing shooting parameter or the rear-facing shooting parameter. Content of shot images varies depending on the shooting parameter. In order to adapt to target region images corresponding to different shooting parameters, different preset target parts may be set for the different shooting parameters, such that the target region images may be extracted based on the different preset target parts.

Optionally, the target part corresponding to the shooting parameter is determined, and a target region in the video frame to be processed in which the target part is located is determined, so as to extract the target region image corresponding to the target region.

In this embodiment, for different shooting parameters, the target parts corresponding thereto may be determined. For example, if a current shooting parameter is the rear-facing shooting parameter, there is a wider visual range for shooting video frame content, and an image of the whole body of the user can be shot. In this case, the corresponding target part may be the head of the user. If the current shooting parameter is the front-facing shooting parameter, an image of a local feature of the user is generally shot. In this case, an image of the head of the user may be shot, and thus the corresponding target part may be an eye, the nose, etc. of the user. After the target part is determined, further, the target region in the video frame to be processed in which the target part is located is determined, so as to extract the target region image corresponding to the target region. The benefit of such a setting is as follows. The target region image to be extracted may be dynamically determined based on the shooting parameter, which makes the application range wider, and enriches the use experience of the user.

It should also be noted that the target object of the frame-in picture may be of a variety of object types, and content of the target region image may be determined and extracted depending on the object types. During practical application, the object type of the target object is first detected, and then for different object types, different target parts may be determined as target region images. For example, for the user or the pet, the head thereof generally attracts more attention, and thus image content of the head may be extracted as the target region image. For a scenery, a region of interest of the scenery tends to attract more attention, and thus image content of the region of interest of the scenery may be extracted as the target region image. For a plant, an image of a flower of the plant may be used as the target region image. The benefit of such a setting is as follows. The target region image is extracted in more diversified manners to meet a personalized requirement of the user.

S230: Adjust a display size of the target region image.

It may be understood that the display size of the target region image is gradually reduced until it is reduced to a preset display size threshold.

In this embodiment, the adjusting the display size of the target region image includes: gradually adjusting the display size of the target region image according to a preset reduction ratio or reduction size; or gradually reducing the display size of the target region image according to a picture size of a currently displayed picture and a preset adjustment duration.

The preset reduction ratio or reduction size may be understood as a ratio or size at which a reduction is made on the basis of a previous display size reduction. The preset adjustment duration may be understood as a duration of a reduction change in the target region image. Optionally, the preset adjustment duration is 2s, and a reduction size or reduction ratio corresponding to each frame may be determined based on the picture size of the current display picture, the preset adjustment duration, and a corresponding final display size, to gradually reduce the display size of the target region image.

In this embodiment, the magnitude of the display size of the target region image can be adaptively adjusted. For adjustments of the display size of the target region image, the display size may be adjusted multiple times, and each adjustment may be made at a ratio of a last display size to a current display of 5:4. For example, for an initial adjustment of the display size of the target region image, a ratio of an original display size of the target region image to the initially adjusted display size of the target region image is 5:4, and during subsequent adjustments, each adjustment is made at the ratio of 5:4. The benefit of such a setting is as follows. A visual effect that the display size of the target region image gradually changes to the final display size is created, improving the visual sense of the user.

On the basis of the above embodiment, during the process of gradually adjusting the display size of the target region image according to the preset adjustment ratio, the method further includes: when the display size of the target region image is a preset display size, displaying, at the associated position, the at least one piece of information to be displayed.

First, the preset display size is a display size that the target region image can reach during a reduction process, and when the target region image reaches the display size, it indicates that the information to be displayed can be displayed at the associated position.

For example, if the display size of the target region image is gradually adjusted according to the preset adjustment ratio of 5:4, the display size of the target region image is gradually reduced. When a ratio of the display size of the target region image to the size of a current display interface is greater than or equal to a preset ratio of 10:1, the at least one piece of information to be displayed is displayed at the associated position. The benefit of such a setting is as follows. The display size of the target region image is first adjusted, and after the display size of the target region image is adjusted to a proper size, the at least one piece of information to be displayed is displayed at the associated position, which allows the user to receive visual information in sequential order, and avoids display of various pieces of visual information at the same time, thereby improving the visual sense of the user.

S240: Display the target region image at a target position in the video frame to be processed.

S250: Send the preselected target information and the target region image to a client or a server, so that the client or the server performs effect processing on the target information and the target region image.

The target information includes target text or a target image to be processed, and the target text or the target image to be processed is used to determine scene information and a virtual object in the scene information.

It should be particularly noted that, during display of the information to be displayed in a scrolling manner, the target information has been determined. In this case, the target information and the target region image can be sent to the client or the server, so that the client or the server performs the effect processing on the target information and the target region image. The effect processing may be performed in a plurality of manners. In one manner, a target scene and a virtual object that are rendered in advance and correspond to the target information may be called from a database, and then the target region image may be fused with a certain virtual object. In another manner, the client or the server may render a scene and a virtual object in real time based on a word in the target information, and then fuse the target region image with a certain virtual object, to generate a target effect image.

It should be noted that although the target information has been determined before the information to be displayed is displayed in a scrolling manner, the reason for and benefit of continuing display of the information to be displayed in a scrolling manner are as follows. There is sufficient time for the server or the client to render the effect image based on the keyword or call the effect image corresponding to the keyword, and then perform the effect processing on the target region image, such that display content in a display interface is still dynamic when the user waits for the display of the target effect image, thereby the visual effect of the entire process of making the effect image being a smooth transition.

S260: Display, at a position associated with the target position, at least one piece of information to be displayed.

Optionally, in the process of displaying, at the position associated with the target position, the at least one piece of information to be displayed, the method further includes: determining background music corresponding to the target information, to play the background music during cyclic display of the information to be displayed.

On the basis of the above embodiment, the information to be displayed is at least one piece of preset information to be displayed or at least one piece of user-edited information to be displayed. The at least one piece of information to be displayed is cyclically played at the associated position.

In this embodiment, a plurality of pieces of background music may be selected in advance, where one piece of background music may correspond to a plurality of pieces of information to be displayed. In order to meet the personalized requirement of the user, a mapping relationship between information to be displayed and background music may be preset and stored in the server or the client. During practical application, the target information is part of the information to be displayed, and therefore, the target information also has corresponding background music. After the target information is determined, the background music corresponding to the target information may be called by means of identification information and then played during the cyclic display of the information to be displayed. The benefit of such a setting is as follows. During the effect processing for the target region image, the information to be displayed is cyclically displayed visually, and the background music is played aurally, allowing the user to have a rich sensory experience while waiting and preventing them from losing interest while waiting.

S270: Display a target effect image when an effect image display condition is satisfied.

By means of the technical solution of this embodiment of the present disclosure, when it is detected that the image acquisition condition is satisfied, the video frame to be processed may be obtained in a variety of manners, and the target region image may be extracted from the video frame to be processed in a variety of manners. Subsequently, the display size of the target region image is gradually adjusted according to the preset adjustment ratio, so that the target region image of a proper size is displayed at the target position in the video frame to be processed. Then, the target region image is displayed at the target position in the video frame to be processed. The pre-selected target information and the target region image are sent to the client or the server, so that the client or the server performs the effect processing on the target information and the target region image, and in the meantime, the at least one piece of information to be displayed is displayed at the position associated with the target position. Finally, the target effect image is displayed when the effect image display condition is satisfied. Thus, the video frame to be processed can be determined and the target region image can be extracted in more diversified manners, and the personalized requirement of the user is thus met. In addition, during the effect processing for the target region image, the information to be displayed is cyclically displayed visually, and the background music is played aurally, allowing the user to have a rich sensory experience while waiting and preventing them from losing interest while waiting, thereby enhancing the fun during use by the user.

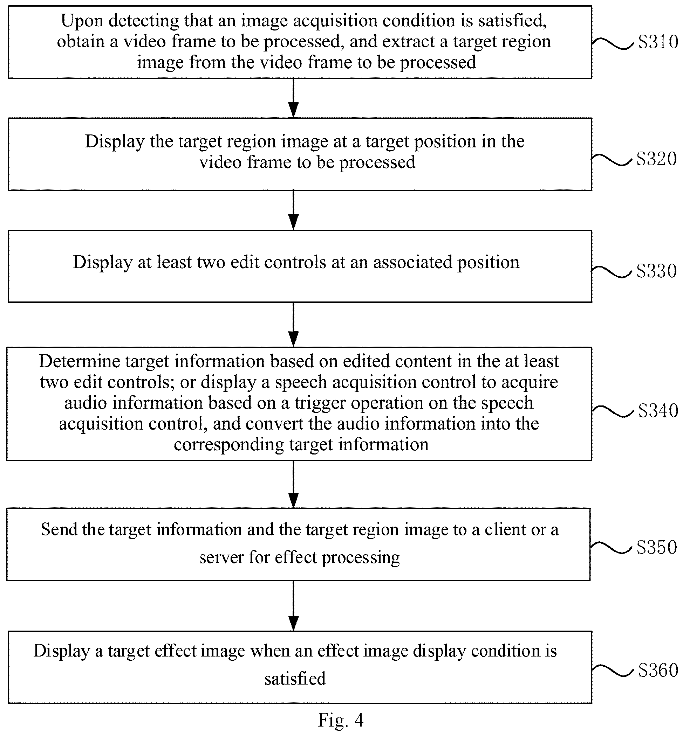

Fig. 4 is a schematic flowchart of an image processing method according to an embodiment of the present disclosure. On the basis of the foregoing embodiments, in order to meet the personalized requirement of the user, the target information may be generated in a customized manner. For the specific implementation thereof, reference may be made to the technical solution of this embodiment. Details about technical terms that are the same as or corresponding to those in the above embodiment are not described herein again.

As shown in Fig. 4, the method specifically includes the following steps.

S310: Upon detecting that an image acquisition condition is satisfied, obtain a video frame to be processed, and extract a target region image from the video frame to be processed.

S320: Display the target region image at a target position in the video frame to be processed.

S330: Display at least two edit controls at an associated position.

The edit controls may be rectangular edit boxes, and the edit controls may be used to receive user input and editing of text. In addition, functions such as deleting, moving an insertion position, and selecting text may also be implemented.

In this embodiment, during the effect processing, not only the target information can be determined from the information to be displayed, but the target information can also be manually edited by the user. Two or more edit controls may be preset at the position associated with the target position, so that the user can enter personalized target information through the edit controls, to meet diversified requirements of the user.

S340: Determine target information based on edited content in the at least two edit controls; or display a speech acquisition control to acquire audio information based on a trigger operation on the speech acquisition control, and convert the audio information into the corresponding target information.

During practical application, the user may enter personalized content in the two or more edit controls, or may delete or move the entered content. After the user completes editing, the edited content entered by the user may be used as the target information. Alternatively, the speech acquisition control may be preset and displayed on a display page, such that the user can acquire their audio by triggering the speech acquisition control, and then the audio information may be converted into the target information.

S350: Send the target information and the target region image to a client or a server for effect processing.

During practical application, the user can determine the target information through the edit controls or the speech acquisition control, and the server can render a scene and a virtual object in real time based on the target information edited by the user, to generate the target effect image corresponding to the target information edited by the user. The benefit of such a setting is as follows. The interaction between the user and the display interface is enhanced, the personalized requirement of the user is met, and the user experience is thus improved.

S360: Display a target effect image when an effect image display condition is satisfied.

By means of the technical solution of this embodiment of the present disclosure, the video frame to be processed is obtained when it is detected that the image acquisition condition is satisfied, and the target region image is extracted from the video frame to be processed. Further, the target region image is displayed at the target position in the video frame to be processed. The at least two edit controls may be displayed at the associated position. Further, the target information is determined based on the edited content in the at least two edit controls, or the speech acquisition control is displayed to acquire the audio information based on the trigger operation on the speech acquisition control, and then the audio information is converted into the corresponding target information. The target information and the target region image are sent to the client or the server for effect processing. Finally, the target effect image is displayed when the effect image display condition is satisfied. As such, the interaction between the user and the display interface is further enhanced, the personalized requirement of the user is met, and the user experience is thus improved.

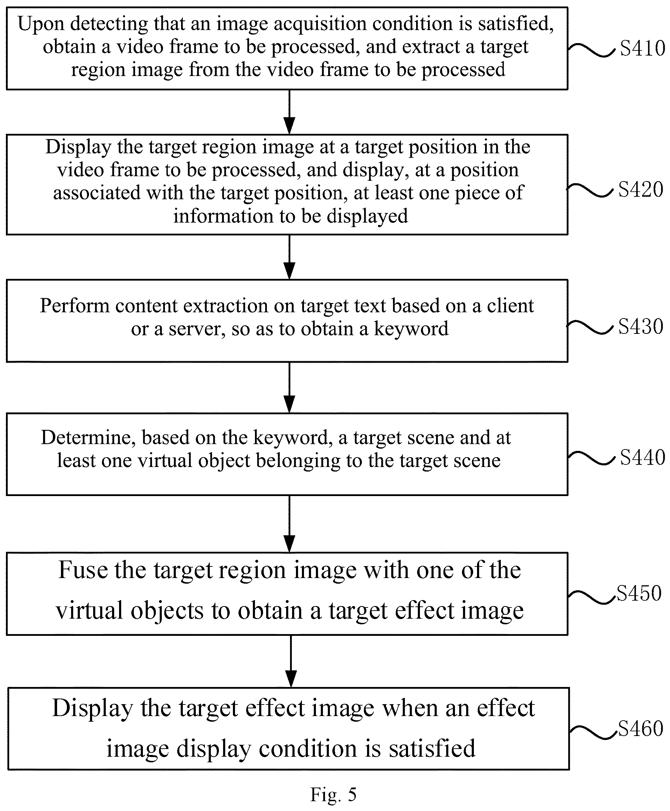

Fig. 5 is a schematic flowchart of an image processing method according to an embodiment of the present disclosure. On the basis of the foregoing embodiments, the generation of the target effect image based on the target information and the target region image can be further refined. For a specific implementation, reference may be made to the technical solution of this embodiment. Details about technical terms that are the same as or corresponding to those in the above embodiment are not described herein again.

As shown in Fig. 5, the method specifically includes the following steps.

S410: Upon detecting that an image acquisition condition is satisfied, obtain a video frame to be processed, and extract a target region image from the video frame to be processed.

S420: Display the target region image at a target position in the video frame to be processed, and display, at a position associated with the target position, at least one piece of information to be displayed.

S430: Perform content extraction on target information based on a client or a server, to obtain a keyword.

In this embodiment, the target information uploaded to the client or the server may be transmitted based on different controls, where words in the target information correspond to the controls, in the case a keyword corresponding to each control may be directly obtained. In addition, a plurality of keywords in the target information may be wholly uploaded to the client or the server in the form of a character string. In this case, word segmentation processing may be performed on content of the target information using a word segmentation tool, so as to obtain the keyword.

In this embodiment, the keyword may be a preset word that can be recognized by the application software. The keyword in the target information may include a word for describing an object type, a scene, or an action posture. The object type may include at least one of an animal, a plant, a user, and a scenery. The scene may include, but is not limited to, an indoor scene, a sports field, home, etc. The action posture may include eating hot pot, playing football, drinking milky tea, etc.

In this embodiment, after receiving the target information, the client or the server may split and extract the content of the target information to obtain the keyword. For example, when the target information is "A person is eating hot pot and watching a football game at home", its corresponding keyword includes an object type: "person"; a scene: "at home"; and an action posture: "eating hot pot and watching a football game".

S440: Determine, based on the keyword, a target scene and at least one virtual object belonging to the target scene.

The target scene is a scene picture corresponding to the keyword. For example, when the keyword is "at home", the corresponding target scene is a scene picture of home, in which a television, a sofa, etc. may be included. The virtual object is an image rendered or called by the server based on the keyword. For example, when the keyword is "playing football", the virtual object is a user who is playing football.

Optionally, the target scene and at least one virtual object belonging to the target scene may be determined based on the keyword in two manners. The first manner is: rendering, based on the keyword, the target scene and the at least one virtual object belonging to the target scene.

In this embodiment, the client or the server may render, based on the keyword, the target scene and a plurality of virtual objects belonging to the target scene. During practical application, the target scene corresponding to the keyword can be rendered based on the keyword using a generative adversarial network (GAN), and a plurality of virtual objects belonging to the target scene may also be rendered.

The second manner is: determining, according to a pre-established correspondence between a keyword to be displayed and a scene to be displayed, the target scene corresponding to the keyword and the at least one virtual object belonging to the target scene.

In this embodiment, a plurality of keywords may be preset, and target scenes or virtual objects corresponding to the keywords may be made respectively. Further, a mapping relationship between the keywords and the target scenes or virtual objects is established and stored in a storage space.

During practical application, when the target information is obtained, the keyword in the target information can be extracted based on the word segmentation tool, to obtain at least one word segment. The word segments are traversed based on preset keywords, and when it is determined that one of the word segments in the preset keywords is extracted, this word segment is used as the keyword corresponding to the target information. Further, according to the mapping relationship between the keywords and the target scenes and the mapping relationship between the keywords and the virtual objects, a target scene corresponding to the target information and at least one virtual object belonging to the target scene may be determined from the plurality of target scenes and virtual objects. The benefit of such a setting is as follows. The target scene and the virtual object may be determined in more diversified manners to meet a personalized requirement of the user.

S450: Fuse the target region image with one of the virtual objects to obtain a target effect image.

In this embodiment, there may be one or more virtual objects. When there is one virtual object, this virtual object may be used as a virtual object to be fused with the target region image, so as to obtain the target effect image. When there are a plurality of virtual objects, the user can select one virtual object from these virtual objects for effect processing. In addition to free selection by the user, a salient region corresponding to the virtual object may also be determined, and the virtual object in the salient region may be fused with the target region image to obtain the target effect image. The benefit of such a setting is as follows. The personalized requirement of the user is met, and the intelligence of an effect prop is also improved.

It should be particularly noted that, step S420 and steps S430 to S450 are performed simultaneously during practical application. During the cyclic display of the information to be displayed at the associated position, the client or the server performs the effect processing on the target information and the target region image.

In this embodiment, the target effect image is also determined by: determining fusion information for the target region image based on the target position for the target region image, and determining the target effect image based on the fusion information and the target information.

The fusion information is information to be fused with the target region image.

In this embodiment, after the target region image is determined, the target region image may be scaled, so that the target region image is finally displayed at the target position. An image that has the highest matching degree with the target information may be called based on the target position and used as the fusion information, and then the target region image may be filled into the fusion information to obtain the target effect image. For example, the target position is a part on the display page that is close to an upper edge, and then a part in the determined fusion information that requires filling is also at an upper position. The benefit of such a setting is as follows. The fusion information is determined based on the target position, so that the adaptability between the target position and fusion information can be improved, and the user experience of the user can also be improved.

S460: Display the target effect image when an effect image display condition is satisfied.

By means of the technical solution of this embodiment of the present disclosure, the video frame to be processed is obtained when it is detected that the image acquisition condition is satisfied, and the target region image is extracted from the video frame to be processed. Further, the target region image is displayed at the target position in the video frame to be processed, and the at least one piece of information to be displayed is displayed at the position associated with the target position. At the same time, content extraction is performed on the target information based on the client or the server, to obtain the keyword. Further, the target scene and the at least one virtual object belonging to the target scene are determined based on the keyword, and then the target region image is fused with one of the virtual objects to obtain the target effect image. Finally, the target effect image is displayed when the effect image display condition is satisfied. The target scene and the virtual object are determined based on the keyword in the target information, and the target region image is fused with the target scene and the virtual object to obtain the target effect image, such that the accuracy of filtering the target scene and the virtual object is increased, and the intelligence of the effect prop is also improved.

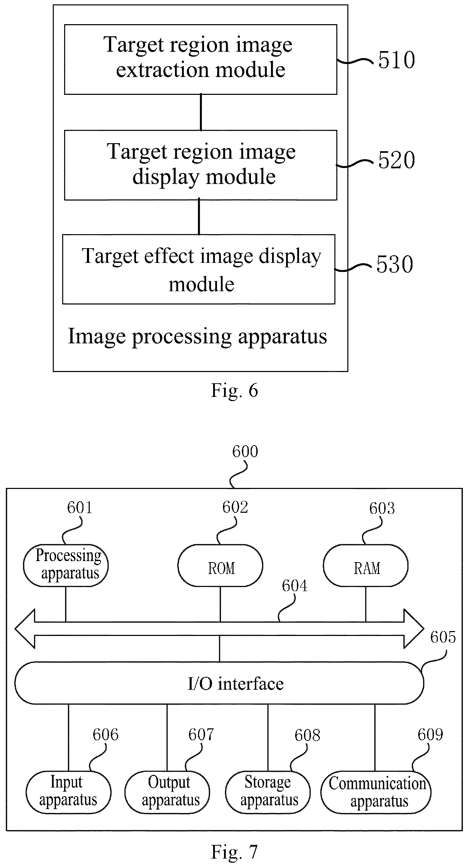

Fig. 6 is a schematic diagram of a structure of an image processing apparatus according to an embodiment of the present disclosure. As shown in Fig. 6, the apparatus includes: a target region image extraction module 510, a target region image display module 520, and a target effect image display module 530.

The target region image extraction module 510 is configured to, upon detecting that an image acquisition condition is satisfied, obtain a video frame to be processed, and extract a target region image from the video frame to be processed.

The target region image display module 520 is configured to display the target region image at a target position in the video frame to be processed, and display, at a position associated with the target position, at least one piece of information to be displayed, where the information to be displayed includes text to be displayed and/or an image to be displayed.

The target effect image display module 530 is configured to display a target effect image when an effect image display condition is satisfied, where the information to be displayed includes target information, and the target effect image is associated with the target information and the target region image.

On the basis of the above technical solutions, the image acquisition condition includes at least one of the followings:
detecting triggering of an image acquisition control;
detecting triggering of an effect prop;
detecting a frame-in picture including a target object;
an image acquisition wake-up word being included in acquired speech information; and
detecting a current posture of a target object being consistent with a preset posture.

On the basis of the above technical solutions, the target region image extraction module 510 includes: a to-be-processed video frame obtaining unit and a target region image extraction unit.

The to-be-processed video frame obtaining unit is configured to: obtain the video frame to be processed from video frames to be displayed that are acquired within a preset duration; or use a video frame acquired at the end of a countdown as the video frame to be processed; or when an acquired video frame includes a target object, use the video frame as the video frame to be processed.

The target region image extraction unit is configured to: determine and extract the target region image based on an edit operation for the video frame to be processed; or extract, based on a preset target part, the target region image corresponding to the target part from the video frame to be processed; or extract, based on a shooting parameter, the target region image from the video frame to be processed, where the shooting parameter includes a front-facing shooting parameter or a rear-facing shooting parameter; or extract, based on an object type of the target object in the video frame to be processed, the target region image from the video frame to be processed, where the object type includes at least one of an animal, a plant, a user, and a scenery.

On the basis of the above technical solutions, the target region image extraction unit is further configured to determine a target part corresponding to the shooting parameter, and determine a target region in the video frame to be processed in which the target part is located, so as to extract the target region image corresponding to the target region.

On the basis of the above technical solutions, the target region image display module 520 includes a display size adjustment unit configured to adjust a display size of the target region image before the target region image is displayed at the target position in the video frame to be processed.

On the basis of the above technical solutions, the display size adjustment unit is further configured to: gradually adjust the display size of the target region image according to a preset reduction ratio or reduction size; or gradually reduce the display size of the target region image according to a picture size of a currently displayed picture and a preset adjustment duration.

On the basis of the above technical solutions, the display size adjustment unit is further configured to, during the process of adjusting the display size of the target region image, when the display size of the target region image is a preset display size, display, at the associated position, the at least one piece of information to be displayed.

On the basis of the above technical solutions, the target position includes at least one of the followings:
a preset display position used as the target position; and
a blank region in the video frame to be processed that is dynamically determined and used as the target position.

Accordingly, the associated position is a position at a lower edge of the target position.

On the basis of the above technical solutions, the target region image display module 520 further includes: a text and image sending unit configured to, before the at least one piece of information to be displayed is displayed at the position associated with the target position, send the preselected target information and the target region image to a client or a server, so that the client or the server performs effect processing on the target information and the target region image.

On the basis of the above technical solutions, the text to be displayed includes words corresponding to at least three dimensions, the at least three dimensions including time, place, and event dimensions.

On the basis of the above technical solutions, the target region image display module 520 further includes: an edit control display unit, a target information processing unit, and an effect processing unit.

The edit control display unit is configured to display at least two edit controls at the position associated with the target position before displaying, at the associated position, the at least one piece of information to be displayed.

The target information processing unit is configured to: determine the target information based on edited content in the at least two edit controls; or display a speech acquisition control to acquire audio information based on a trigger operation on the speech acquisition control, and convert the audio information into the corresponding target information.

The effect processing unit is configured to send the target information and the target region image to a client or a server for effect processing.

On the basis of the above technical solutions, the target region image display module 520 further includes a background music playback unit configured to determine background music corresponding to the target information, to play the background music during cyclic display of the information to be displayed.

On the basis of the above technical solutions, the information to be displayed is at least one piece of preset information to be displayed or at least one piece of user-edited information to be displayed; and the at least one piece of information to be displayed is cyclically played at the associated position.

On the basis of the above technical solutions, the effect image display condition includes at least one of the followings:
the target effect image having been made;
an actual duration for making the target effect image reaching a preset duration threshold; and
detecting triggering of a control for displaying the target effect image.

On the basis of the above technical solutions, the target effect image display module 530 is configured to determine fusion information for the target region image based on the target position for the target region image, and determine the target effect image based on the fusion information and the target information.

On the basis of the above technical solutions, the target effect image display module 530 includes a transition animation generation unit configured to generate a transition animation based on the target effect image, so as to display the target effect image based on the transition animation.

On the basis of the above technical solutions, the target effect image display module 530 further includes a keyword obtaining unit, a virtual object determination unit, and a target effect image generation unit.

The keyword obtaining unit is configured to perform content extraction on the target information based on the client or the server, to obtain a keyword.

The virtual object determination unit is configured to determine, based on the keyword, a target scene and at least one virtual object belonging to the target scene.

The target effect image generation unit is configured to fuse the target region image with one of the virtual objects to obtain the target effect image.

On the basis of the above technical solutions, the virtual object determination unit is further configured to: render, based on the keyword, the target scene and the at least one virtual object belonging to the target scene; or determine, according to a pre-established correspondence between a keyword to be displayed and a scene to be displayed, the target scene corresponding to the keyword and the at least one virtual object belonging to the target scene.

By means of the technical solution of this embodiment of the present disclosure, the video frame to be processed is obtained when it is detected that the image acquisition condition is satisfied, and the target region image is extracted from the video frame to be processed. Further, the target region image is displayed at the target position in the video frame to be processed, and the at least one piece of information to be displayed is displayed at the position associated with the target position, where the information to be displayed includes the text to be displayed and/or the image to be displayed. Finally, the target effect image is displayed when the effect image display condition is satisfied, where the information to be displayed includes the target information, and the target effect image is associated with the target information and the target region image. By means of the technical solution provided in this embodiment of the present disclosure, a target region image is extracted from an image to be processed, and the target region image and information to be displayed are displayed in the video frame to be processed. Further, an effect scene and a virtual object are generated based on the target information, and the target region image is fused with the virtual object to finally obtain the target effect image. Therefore, an effect image can be rendered based on the randomly determined target information and target region image, to obtain a personalized effect display image, which diversifies content of the effect image, and thus enhances the fun during use by a user.

The image processing apparatus provided in this embodiment of the present disclosure can perform the image processing method provided in any embodiment of the present disclosure, and has corresponding functional modules and beneficial effects for performing the method.

It is worth noting that the units and modules included in the above apparatus are obtained through division merely according to functional logic, but are not limited to the above division, as long as corresponding functions can be implemented. In addition, specific names of the functional units are merely used for mutual distinguishing, and are not used to limit the protection scope of the embodiments of the present disclosure.

Fig. 7 is a schematic diagram of a structure of an electronic device according to an embodiment of the present disclosure. Reference is made to Fig. 7 below, which is a schematic diagram of a structure of an electronic device (such as a terminal device or a server in Fig. 7) 600 suitable for implementing an embodiment of the present disclosure. The terminal device in this embodiment of the present disclosure may include, but is not limited to, mobile terminals such as a mobile phone, a notebook computer, a digital broadcast receiver, a personal digital assistant (PDA), a tablet computer (PAD), a portable multimedia player (PMP), and a vehicle-mounted terminal (such as a vehicle navigation terminal), and fixed terminals such as a digital TV and a desktop computer. The electronic device shown in Fig. 7 is merely an example, and shall not impose any limitation on the function and scope of use of the embodiments of the present disclosure.

As shown in Fig. 7, the electronic device 600 may include a processing apparatus (e.g., a central processing unit or a graphics processing unit) 601 that may perform a variety of appropriate actions and processing in accordance with a program stored in a read-only memory (ROM) 602 or a program loaded from a storage apparatus 608 into a random-access memory (RAM) 603. The RAM 603 further stores various programs and data required for the operation of the electronic device 600. The processing apparatus 601, the ROM 602, and the RAM 603 are connected to each other through a bus 604. An input/output (I/O) interface 605 is also connected to the bus 604.

Generally, the following apparatuses may be connected to the I/O interface 605: an input apparatus 606 including, for example, a touchscreen, a touchpad, a keyboard, a mouse, a camera, a microphone, an accelerometer, and a gyroscope; an output apparatus 607 including, for example, a liquid crystal display (LCD), a speaker, and a vibrator; the storage apparatus 608 including, for example, a tape and a hard disk; and a communication apparatus 609. The communication apparatus 609 may allow the electronic device 600 to perform wireless or wired communication with other devices to exchange data. Although Fig. 7 shows the electronic device 600 having various apparatuses, it should be understood that it is not required to implement or have all of the shown apparatuses. It may be an alternative to implement or have more or fewer apparatuses.

In particular, according to an embodiment of the present disclosure, the process described above with reference to the flowchart may be implemented as a computer software program. For example, this embodiment of the present disclosure includes a computer program product, which includes a computer program carried on a non-transitory computer-readable medium, where the computer program includes program code for performing the method shown in the flowchart. In such an embodiment, the computer program may be downloaded from a network through the communication apparatus 609 and installed, installed from the storage apparatus 608, or installed from the ROM 602. When the computer program is executed by the processing apparatus 601, the above-mentioned functions defined in the method of the embodiment of the present disclosure are performed.

The names of messages or information exchanged between a plurality of apparatuses in the implementations of the present disclosure are used for illustrative purposes only, and are not used to limit the scope of these messages or information.

The electronic device according to this embodiment of the present disclosure and the image processing methods according to the above embodiments belong to the same inventive concept. For the technical details not exhaustively described in this embodiment, reference may be made to the above embodiments, and this embodiment and the above embodiments have the same beneficial effects.

An embodiment of the present disclosure provides a computer storage medium having stored thereon a computer program that, when executed by a processor, causes the image processing method provided in the above embodiments to be implemented.

It should be noted that the above computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. More specific examples of the computer-readable storage medium may include, but are not limited to: an electrical connection having one or more wires, a portable computer magnetic disk, a hard disk, a random access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may further be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), etc., or any suitable combination thereof.

In some implementations, a client and a server may communicate using any currently known or future-developed network protocol such as the Hypertext Transfer Protocol (HTTP), and may be connected to digital data communication (for example, a communication network) in any form or medium. Examples of the communication network include a local area network ("LAN"), a wide area network ("WAN"), an internetwork (for example, the Internet), a peer-to-peer network (for example, an ad hoc peer-to-peer network), and any currently known or future-developed network.

The above computer-readable medium may be contained in the above electronic device. Alternatively, the computer-readable medium may exist independently, without being assembled into the electronic device.

The above computer-readable medium carries one or more programs that, when executed by the electronic device, cause the electronic device to:

The above computer-readable medium carries one or more programs that, when executed by the electronic device, cause the electronic device to:
upon detecting that an image acquisition condition is satisfied, obtain a video frame to be processed, and extract a target region image from the video frame to be processed;
display the target region image at a target position in the video frame to be processed, and display, at a position associated with the target position, at least one piece of information to be displayed, where the information to be displayed includes text to be displayed and/or an image to be displayed; and
display a target effect image when an effect image display condition is satisfied,
where the information to be displayed includes target information, and the target effect image is associated with the target information and the target region image.

Computer program code for performing operations of the present disclosure can be written in one or more programming languages or a combination thereof, where the programming languages include but are not limited to object-oriented programming languages, such as Java, Smalltalk, and C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user through any kind of network, including a local area network (LAN) or a wide area network (WAN), or may be connected to an external computer (for example, connected through the Internet with the aid of an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. Names of the units do not constitute a limitation on the units themselves in some cases, for example, a first obtaining unit may alternatively be described as "a unit for obtaining at least two Internet Protocol addresses".

The functions described herein above may be performed at least partially by one or more hardware logic components. For example, without limitation, exemplary types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random-access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

The foregoing descriptions are merely preferred embodiments of the present disclosure and explanations of the applied technical principles. Those skilled in the art should understand that the scope of disclosure involved in the present disclosure is not limited to the technical solutions formed by specific combinations of the foregoing technical features, and shall also cover other technical solutions formed by any combination of the foregoing technical features or equivalent features thereof without departing from the foregoing concept of disclosure. For example, a technical solution formed by a replacement of the foregoing features with technical features with similar functions disclosed in the present disclosure (but not limited thereto) also falls within the scope of the present disclosure.

In addition, although the various operations are depicted in a specific order, it should not be construed as requiring these operations to be performed in the specific order shown or in a sequential order. Under certain circumstances, multitasking and parallel processing may be advantageous. Similarly, although several specific implementation details are included in the foregoing discussions, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable sub-combination.

Although the subject matter has been described in a language specific to structural features and/or logical actions of the method, it should be understood that the subject matter defined in the appended claims is not necessarily limited to the specific features or actions described above. In contrast, the specific features and actions described above are merely exemplary forms of implementing the claims.

## Claims

1. An image processing method, comprising:
in response to detecting that an image acquisition condition is satisfied, obtaining a video frame to be processed, and extracting a target region image from the video frame to be processed;
displaying the target region image at a target position in the video frame to be processed, and displaying, at a position associated with the target position, at least one piece of information to be displayed, wherein the information to be displayed comprises text to be displayed and/or an image to be displayed; and
displaying a target effect image when an effect image display condition is satisfied,
wherein the information to be displayed comprises target information, and the target effect image is associated with the target information and the target region image.

2. The image processing method according to claim 1, wherein the obtaining a video frame to be processed comprises:
obtaining the video frame to be processed from video frames to be selected that are acquired within a preset duration; or
using a video frame acquired at the end of a countdown as the video frame to be processed; or
when an acquired video frame comprises a target object, using the video frame as the video frame to be processed.

3. The image processing method according to claim 1 or 2, wherein the extracting a target region image from the video frame to be processed comprises:
determining and extracting the target region image based on an edit operation for the video frame to be processed; or
extracting, based on a preset target part, the target region image corresponding to the target part from the video frame to be processed; or
extracting, based on a shooting parameter, the target region image from the video frame to be processed, wherein the shooting parameter comprises a front-facing shooting parameter or a rear-facing shooting parameter; or
extracting, based on an object type of the target object in the video frame to be processed, the target region image from the video frame to be processed, wherein the object type comprises at least one of an animal, a plant, a user, and a scenery.

4. The image processing method according to claim 3, wherein the extracting, based on a shooting parameter, the target region image from the video frame to be processed comprises:
determining a target part corresponding to the shooting parameter, and determining a target region in the video frame to be processed in which the target part is located, so as to extract the target region image corresponding to the target region.

5. The image processing method according to any one of claims 1 to 4, wherein before the displaying the target region image at a target position in the video frame to be processed, the image processing method further comprises:
adjusting a display size of the target region image.

6. The image processing method according to claim 5, wherein the adjusting a display size of the target region image comprises:
gradually adjusting the display size of the target region image according to a preset reduction ratio or reduction size; or
gradually reducing the display size of the target region image according to a picture size of a currently displayed picture and a preset adjustment duration.

7. The image processing method according to claim 5 or 6, wherein the adjusting a display size of the target region image further comprises:
when the display size of the target region image is a preset display size, displaying, at the associated position, the at least one piece of information to be displayed.

8. The image processing method according to any one of claims 1 to 7, wherein the target position comprises at least one of the following:
a preset display position used as the target position; and
a blank region in the video frame to be processed that is dynamically determined and used as the target position; and
accordingly, the associated position is a position at a lower edge of the target position.

9. The image processing method according to any one of claims 1 to 8, wherein before the displaying, at a position associated with the target position, at least one piece of information to be displayed, the image processing method further comprises:
sending the preselected target information and the target region image to a client or a server, so that the client or the server performs effect processing on the target information and the target region image,
wherein the target information comprises target text or a target image to be processed, and the target text or the target image to be processed is used to determine scene information and a virtual object in the scene information.

10. The image processing method according to claim 9, wherein the information to be displayed comprises words corresponding to at least three dimensions, the at least three dimensions comprising time, place, and/or event dimensions.

11. The image processing method according to any one of claims 1 to 8, wherein before the displaying, at a position associated with the target position, at least one piece of information to be displayed, the image processing method further comprises:
displaying at least two edit controls at the associated position; and
determining the target information based on edited content in the at least two edit controls; or
displaying a speech acquisition control to acquire audio information based on a trigger operation on the speech acquisition control, and converting the audio information into the corresponding target information; and
sending the target information and the target region image to a client or a server for effect processing.

12. The image processing method according to any one of claims 1 to 11, wherein the information to be displayed is at least one piece of preset information to be displayed or at least one piece of user-edited information to be displayed; and the at least one piece of information to be displayed is cyclically played at the associated position.

13. The image processing method according to any one of claims 1 to 12, wherein the effect image display condition comprises at least one of the following:
the target effect image having been made;
an actual duration for making the target effect image reaching a preset duration threshold; and
detecting triggering of a control for displaying the target effect image.

14. The image processing method according to any one of claims 1 to 13, wherein the displaying a target effect image comprises:
generating a transition animation based on the target effect image, to display the target effect image based on the transition animation.

15. The image processing method according to any one of claims 1 to 14, wherein before the displaying a target effect image, the image processing method further comprises:
determining fusion information for the target region image based on the target position for the target region image, and determining the target effect image based on the fusion information and the target information.

16. The image processing method according to any one of claims 1 to 14, wherein before the displaying a target effect image, the image processing method further comprises:
performing content extraction on the target information based on the client or the server, to obtain a keyword;
determining, based on the keyword, a target scene and at least one virtual object belonging to the target scene; and
fusing the target region image with one of the virtual objects to obtain the target effect image.

17. The image processing method according to claim 16, wherein the determining, based on the keyword, a target scene and at least one virtual object belonging to the target scene comprises:
rendering, based on the keyword, the target scene and the at least one virtual object belonging to the target scene; or
determining, according to a pre-established correspondence between a keyword to be displayed and a scene to be displayed, the target scene corresponding to the keyword and the at least one virtual object belonging to the target scene.

18. An image processing apparatus, comprising:
a target region image extraction module, configured to, in response to detecting that an image acquisition condition is satisfied, obtain a video frame to be processed, and extract a target region image from the video frame to be processed;
a target region image display module, configured to display the target region image at a target position in the video frame to be processed, and display, at a position associated with the target position, at least one piece of information to be displayed, wherein the information to be displayed comprises text to be displayed and/or an image to be displayed; and
a target effect image display module, configured to display a target effect image when an effect image display condition is satisfied,
wherein the information to be displayed comprises target information, and the target effect image is associated with the target information and the target region image.

19. An electronic device, comprising:
one or more processors; and
a storage apparatus configured to store one or more programs,
wherein the one or more programs, when executed by the one or more processors, cause the one or more processors to implement the image processing method according to any one of claims 1 to 17.

20. A storage medium comprising computer-executable instructions, wherein the computer-executable instructions, when executed by a computer processor, are used to perform the image processing method according to any one of claims 1 to 17.
